Europäisches Patentamt

European Patent Office

Office européen des brevets

(11) Numéro de publication: **0 321 367 B1**

# FASCICULE DE BREVET EUROPEEN

(45) Date de publication de fascicule du brevet: **02.09.92**　(51) Int. Cl.⁵: **B23Q 3/10**

(21) Numéro de dépôt: **88420419.9**

(22) Date de dépôt: **15.12.88**

(54) **Dispositif polyvalent de fixation pour moyens de serrage sur un élément de base de machine-outil.**

(30) Priorité: **17.12.87 FR 8717970**

(43) Date de publication de la demande:
**21.06.89 Bulletin 89/25**

(45) Mention de la délivrance du brevet:
**02.09.92 Bulletin 92/36**

(84) Etats contractants désignés:
**AT BE CH DE ES FR GB GR IT LI LU NL SE**

(56) Documents cités:
EP-A- 0 074 565　　EP-A- 0 116 260
EP-A- 0 154 813　　EP-A- 0 180 866
EP-A- 0 203 888　　EP-A- 0 209 100
DE-A- 2 634 923　　DE-A- 3 232 055
DE-A- 3 301 178　　FR-A- 2 296 487
GB-A- 1 156 684　　US-A- 3 555 963
US-A- 3 602 094　　US-A- 4 711 437

WERKSTATTSTECHNIK, vol. 51, no. 12, décembre 1961, page 623, Berlin, DE; A.
SCHATZ: "Die Entwicklung in der Abspanung"

(73) Titulaire: **GERARD GORSE EOUIPEMENTS DE
MACHINES-OUTILS S.A.
1600, route de la Lième
F-39570 Perrigny(FR)**

(72) Inventeur: **Gorse, Gérard
9 Cité Maréchal Foch
F-39000 Lons-le-Saunier(FR)**

(74) Mandataire: **Moinas, Michel
Cabinet Michel Moinas 13 Chemin du Levant
F-01210 Ferney-Voltaire(FR)**

Rank Xerox (UK) Business Services

# Description

La présente invention est relative à un dispositif permettant de positionner, supporter et maintenir des pièces à usiner dans un plan vertical sur un machine-outil. Cette invention se rapporte plus particulièrement à un dispositif de fixation pour moyens de serrage tenant eux-mêmes la pièce sur un élément de base lui-même ancré sur la table d'une machine-outil ou sur une palette mobile.

De manière évidente, il est de prime importance qu'une pièce à usiner soit présentée fermement et dans une position exacte devant les outils de la machine. Pour ce, cette pièce est calée sur une surface contre des moyens de positionnement tels que consoles, réglettes d'appui, appuis coulissants, butées ou supports ; et elle est serrée par un ou plusieurs mandrins, étaux, crampons à came, crampons plaqueurs ou unités de bridage à billes. Ces moyens de serrage sont mis en oeuvre soit manuellement par une poignée agissant sur une came, ou par serrage de boulons dans un trou taraudé ou d'un écrou sur une tige filetée. Ils peuvent aussi être mis en oeuvre par un jeu de vérins hydrauliques, pneumatiques ou électriques.

Ces moyens de serrage et de positionnement sont rarement disposés directement sur la table de la machine-outil, (ou la palette mobile passant devant la machine-outil) pour réaliser les montages complexes et spécifiques à chaque pièce à usiner car celle-ci ne dispose pas en général de points d'ancrage suffisants. Ils sont en fait disposés sur un élément de base disposant lui d'un réseau de points d'ancrage et de positionnement et qui est ancré sur la table (ou la palette). Pour répondre aux diverses situations, ces éléments de base se présentent sous la forme de plaques carrées ou rectangulaires, de plateau circulaire, d'équerres simples ou doubles, ou de cubes. Pour des questions de rigidité, notamment pour les éléments verticaux, ces éléments sont réalisés en des épaisseurs donc des masses conséquentes. Ces éléments sont alors des pièces onéreuses à fabriquer.

Pour que la pièce à usiner soit exactement et fermement positionner, il est bien évident que ces moyens de serrage et de positionnement doivent eux-mêmes être fixés avec de mêmes précautions sur ces éléments de base. A cette fin, plusieurs dispositifs d'alignement et de montage de ces moyens sur les éléments de base ont été développés.

Selon un premier dispositif, décrit par exemple dans les exposés DE-A-3 232 055, EP-A-0 154 813 ou dans les catalogues de la Société HALDER, le positionnement des moyens est réalisé grâce à un quadrillage de rainures en T ou en queue d'aronde taillé dans la plaque de base dans lesquelles viennent s'engager des clavettes ou queues d'aronde solidaires des moyens de serrage. La fixation pour ces moyens est réalisée soit par des coins bloquant les clavettes ou queues d'aronde, soit par des boulons traversant les moyens et s'engageant dans des trous taraudés au fond des rainures.

Selon un autre dispositif décrit dans l'exposé EP-A-0 074 565, la palette présente une trame d'orifices taraudés d'écartement constant ainsi que des parois latérales à partir desquelles les moyens de serrage peuvent être câlés avant fixation à l'aide de boulons.

Selon un autre dispositif décrit dans le catalogue de la Société PREMATEX sous la denomination BLUCO TECHNICK, l'élément de base présente une trame d'orifice dont l'espacement est calibré (cf. exposé EP-A-0 116 674) et une seconde trame de trous taraudés. Les moyens de serrage sont d'abord positionnés grâce à des goupilles traversant ces moyens pour pénétrer dans les orifices calibrés, puis sont fixés grâce à des boulons s'engageant dans les trous taraudés.

Selon un autre dispositif decrit dans le catalogue de la société NIEDECKER sous la denomination FBS, les éléments de base présentent une trame d'orifice dont la section supérieure est calibrée et la section inférieure, de diamètre légèrement réduit, est taraudée. Les moyens sont alors positionnés grâce à des goupilles ne pénétrant que dans la partie supérieure de l'orifice et des boulons plus longs s'engageant dans les filets de la section inférieure. Mieux, des boulons spéciaux comprennent une section supérieure calibrée proche de la tête que prolonge une section taraudée. De tels boulons assurent simultanément le positionnement et le maintien des moyens de serrage et de positionnement.

Satisfaisant quant au maintien précis et ferme des moyens de serrage et de positionnement donc des pièces à usiner sur les éléments de base, ces systèmes présentent de nombreux inconvénients. En effet, lors d'un changement de série de pièces à usiner, le temps nécessaire pour le démontage de la configuration précédente et le montage avec soin de la nouvelle configuration peut s'avérer très long, temps pendant lequel la machine-outil est improductive. Le simple remplacement d'un élément de base par un autre élément de base prégarni nécessite d'une part un double jeu au moins d'éléments de base soit un investissement lourd du fait du prix de chacun des ces éléments, et d'autre part des moyens de levage conséquents soit des opérations lentes de manutention. De plus, certains montages spécifiques peuvent impliquer l'altération de ces éléments de base qui ne peuvent plus être utilisés pour des applications suivantes.

L'usage d'une plaque intermédiaire verticale garnit préalablement de moyens de serrage et sur laquelle la pièce à usiner est prémontée, tel que décrit par exemple dans l'exposé EP-A-0 209 100, s'avère difficile car, une fois soulevé par un bord supérieur à l'aide d'une élingue, l'ensemble est penché du fait que son centre de gravité ne se situe pas dans le plan de la plaque mais plutôt quelque part entre les moyens de serrage et la pièce. Il devient alors très difficile, si ce n'est impossible, de plaquer cet ensemble contre l'élément de base en une position précise pour pouvoir la fixer avec les moyens conventionnels cités ci-dessus tels que goupilles et boulons. En effet, il est malaisé de voir au dernier moment par l'arrière comment les orifices par lesquels doivent passer les goupilles d'alignement viennent en concordance.

L'exposé EP-A-0 116 260 divulgue l'usage d'une plaque intermédiaire horizontale dont deux bords opposés sont munis respectivement d'une réglette et d'une bride sous-jacentes. De ce fait, elle est essentiellement prévue pour être montée sur des éléments de base également horizontaux mais plus petits et dont les bords opposés présentent une rainure en V. Un tel dispositif s'applique mal à une situation verticale car, quelque soit la position des rainures horizontales ou latérales, il est nécessaire d'engager cette lourde plaque garnie dans ces rainures ; donc de la déplacer alors que son poids est encore tenu par l'élingue c'est-à-dire qu'elle est encore penchée et présente une grande inertie. De plus, une erreur de positionnement est encore possible dans le sens des rainures.

Une autre plaque intermédiaire est décrite dans l'exposé EP-A-0 180 866, qui décrit l'état de la technique le plus proche. De par sa forme particulière, cette plaque peut être positionnée avec exactitude dans un plan horizontal grâce à des rouleaux sous-jacents et son propre poids, ce qui est manifestement inapplicable dans un plan vertical. Il est par ailleurs aussi prévu de tenir cette plaque en serrant deux bords opposés entre une réglette et des brides. Tel que présentement conçus, ces brides sont d'une mise en place difficile si la plaque est verticale et tend à basculer. De plus, une erreur de positionnement est encore possible dans le sens de la réglette.

Le but de la présente invention est un dispositif de fixation d'une plaque intermédiaire verticale selon le préambule de la revendication 1, sur laquelle sont montés des moyens de serrage permettant de maintenir en position des pièces à usiner, contre un élément de base ancré sur la table d'une machine-outil ou sur une palette mobile, qui permet essentiellement de réaliser un positionnement exact sur trois plans et ce avec une grande rigidité. De plus, de par sa conception, ce dispositif doit aussi permettre un changement facile et rapide des plaques par de simples mouvements et sans nécessiter un espace libre trop important autour de la machine ou de la palette. Si possible, ce dispositif doit permettre de plus la fixation de plusieurs plaques distinctes sur une même face d'appui de l'élément de base constituant ainsi un système modulaire. Enfin, ce dispositif doit permettre des économies dans les coûts d'équipement en évitant d'une part que trop d'éléments de base soient nécessaires et en réduisant d'autre part des frais de réalisation des plaques intermédiaires du fait de leur simplicité.

Ces buts sont atteints grâce à une plaque intermédiaire dont deux côtés opposés présentent, en section transversale, une partie oblique orientée vers l'extérieur leur permettant d'être enclavés contre l'élément de base muni en un bord d'une ou plusieurs règles fixes de positionnement et en un bord opposé d'une ou plusieurs brides mobiles, chaque règle et bride présentant, en section transversale, un profil interne complémentaire au bord de la plaque intermédiaire qu'elle maintient respectivement.

Plus particulièrement, la plaque intermédiaire est parallélépipédique aplatie verticale avec sa face intérieure plane venant se plaquer contre la face verticale également plane de l'élément de base ; les règles fixes sont diposées dans la partie inférieure de l'élément de base et les brides mobiles, engagées en permanence dans le bord supérieur de l'élément de base, sont guidées de telle sorte a être mobiles seulement dans un plan orthogonal par rapport á cette plaque intermédiaire. De plus, la face intérieure de la plaque intermédiaire et la face plane extérieure de l'élément de base sont complétées de moyens permanents de positionnement de la plaque dans le sens latéral.

Avantageusement, la distance entre deux côtés opposés de la plaque est standardisée de telle sorte que, par exemple, la longueur correspond à la hauteur standard des éléments de base et que la largeur est identique ou un sous-multiple de la largeur de ces mêmes éléments de base.

Suivant des formes de réalisation avantageuses, l'un ou les deux bords opposés permettant à la plaque intermédiaire d'être enclavée l'élément de base peuvent présenter respectivement, en section transversale, soit essentiellement un profil rectiligne oblique orienté vers l'extérieur faisant avec le plan de la plaque un angle compris entre 20° et 75° ; soit un profil composé d'une section extérieure perpendiculaire au plan de la plaque, une section médiane rectilingne oblique faisant un angle compris entre 0° et 40° avec le plan de la plaque et une section intérieure perpendiculaire au plan de la plaque ; soit un profil dont une section est en arc de cercle.

Pour faciliter le positionnement de la plaque intermédiaire, celle-ci peut présenter utilement sur sa face arrière une ou plusieurs clavettes de positionnement orthogonales dont l'extremité des faces superieures et/ou inferieures et/ou laterales sont arrondies ou chamfreinees obliquement, lesquelles clavettes, viennent se loger, lors de l'installation de la plaque sur l'élément de base, dans des rainures complémentaires taillées dans cet élément de base. A l'inverse, l'élément de base peut présenter sur sa face extérieure, une ou plusieurs clavettes de positionnement orthogonales venant se loger dans des rainures complémentaires taillées dans la plaque intermédiaire. Les coins arrière supérieur et inférieur des clavettes de positionnement peuvent être arrondies ou tronçonnées obliquement. Les clavettes peuvent aussi être elles-mêmes fendues horizontalement ou verticalement pour augmenter leur élasticité et ce, au milieu ou plutôt décalé de côté pour créer une partie rigide d'appui. Pour améliorer le centrage des clavettes de positionnement, les rainures peuvent être munies en leur extrémité de pièces intérieures mobiles élastiquement lors de la pénétration des clavettes dans les rainures correspondantes.

Selon un mode de réalisation, l'élément de base présent, sous chaque bride mobile, un siège de bride sous la forme d'une encoche dont le profil, vu en section transversale, est rectiligne oblique orienté vers l'intérieur. Chaque bride présente alors, en section transversale, un profil interne dont la partie extérieure est complémentaire aux bords de la plaque intermédiaire qu'elle maintient et la partie intérieure est rectiligne oblique orientée vers l'extérieur complémentaire au profil du siège dans lequel elle s'asseoit.

Selon un autre mode de réalisation, l'élément de base présente sous chaque bride mobile un siège de bride sous la forme d'une encoche taillée perpendiculairement dans l'élément. La partie intérieure du profil interne de la bride est alors en trois sections : une section intérieure rectiligne, ou légèrement convexe, parallèle au plan de l'élément de base, une section médiane perpendiculaire au plan de l'élément et une dernière section extérieure rectiligne parallèle au plan de l'élément.

Utilement, des moyens élastiques sont logés dans chaque siège de bride permettant de dégager la bride de son siège et/ou du bord de la plaque intermédiaire lors de son ouverture.

Selon une autre caractéristique préférée, la fermeture de la bride peut être réalisée soit par un écrou vissé au-dessus de la bride sur une tige filetée solidaire de l'élément de base et passant au travers de la bride par un orifice élargi dans le sens de la longueur permettant un débattement vertical de cette bride, la rotation de cette bride autour de la tige étant empêchée par les parois verticales du siège de bride ; soit par un vérin hydraulique, pneumatique ou électrique solidaire de l'élément de base.

Avantageusement enfin, le bord inférieur de la plaque a une forme en V orientée vers le bas et le bord supérieur des réglettes de position sont obliques vers le centre de l'élément de base.

L'invention ainsi que ses avantages seront mieux compris à la lecture de la description qui va suivre de modes de réalisation préférés de celle-ci, pris à titre d'exemples nullement limitatifs et faites en référence au dessin annexé sur lequel :

- la figure 1 est une vue de face d'un cube de base muni de deux plaques intermédiaires dont le coin supérieur gauche de la plaque frontale est coupé pour faire apparaître les détails autour de la bride supérieur,
- les figures 2a à 2d présentent, vue en coupe transversales, des variantes du profil des bords inférieurs et supérieurs de la plaque intermédiaire ainsi que des règles de positionnement inférieures et brides de maintien supérieures,
- la figure 3 présente une vue en coupe d'une variante de bride mobile,
- les figures 4a, 4b et 4c illustrent trois formes de clavettes de positionnement et la figure 4c illustre une paire de pièces intérieures mobiles dans les rainures de positionnement, et
- la figure 5 illustre une autre forme des réglettes de positionnement et du bord de la plaque intermédiaire associée.

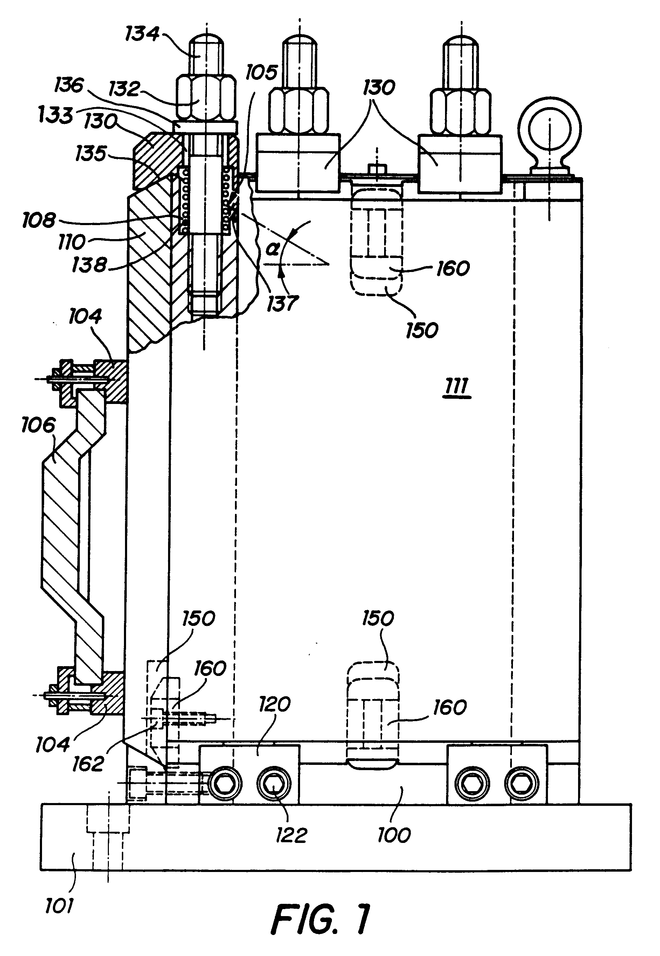

Sur la figure 1 est présenté un élément de base cubique 100 avec son socle 101 permettant de l'attacher sur la table d'une machine-outil ou sur une palette mobile. Cet élément de base cubique est garni d'une plaque intermédiaire 111 frontale et d'une plaque intermédiaire latérale 110. Ces plaques intermédiaires verticales 110,111 ont une forme générale parallélépipédique aplatie. Ces plaques appartenant à un système modulaire, leurs dimensions sont standardisées ainsi que celle de l'élément de base 100 sur lesquelles elle sont montées. Par exemple, la longueur des plaques correspond à la hauteur standard de l'élément, et la largeur est identique ou un sous-multiple (moitié, tiers, quart...) de la largeur de ce même élément 100. Sur la plaque intermédiaire 110 sont fixés deux éléments de serrage, en l'occurrence deux étaux 104, tenant par leur machoire une pièce à usiner 106.

Les plaques intermédiaires 110 et 111 sont chacune soutenues en leur bord inférieur par deux réglettes de positionnement 120 solidaires de l'élément de base 110 par des boulons de fixation 122. Cette réglette 120 peut aussi être une pièce d'un seul tenant, centrée au milieu de l'élément de base et couvrant entre la moitié ou la totalité de la largeur du bloc cubique. La fixation de ces réglettes par des boulons autorise un changement de celles-ci si elles sont usées ou si leur profil ne correspond plus aux plaques utilisées. Si des considérations de solidité priment, ces réglettes peuvent être soudées ou mieux taillées dans la masse.

Les plaques intermédiaires 110 et 111 sont maintenues en leur bord supérieur par des brides 130. Comme pour les réglettes, deux brides sont disposées par bord supérieur de plaque au quart et au trois-quart environ de leur largeur ou une seule bride centrale couvrant au moins une distance équivalente à la moitié de la largeur de la plaque assure le maintien supérieur.

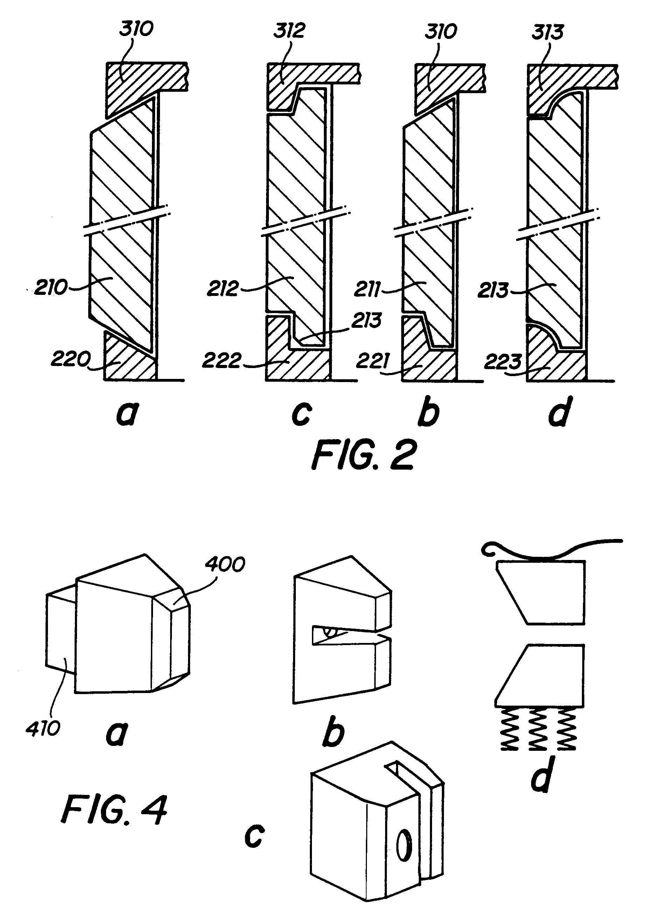

Tel qu'illustré plus en détail sur la figure 2, les bords inférieurs des plaques intermédiaires 210-213 ont, vu en coupe transversale, un profil rentrant complémentaire au profil des réglettes 220-223 respectives et les bords supérieurs ont un profil rentrant, éventuellement différent de celui des bords inférieurs, mais complémentaire au profil des brides 310-313 respectives.

Par exemple, sur la figure 2a, les bords supérieurs et inférieurs ont un profil identique rectiligne oblique à 45° orienté vers l'extérieur et la réglette 220 et la bride 310 correspondantes, ont des profils internes rectilignes obliques à 45° orientés vers l'intérieur.

Sur la figure 2b, le profil des bords inférieurs de la plaque intermédiaire 211 comprend une partie extérieure rectiligne orthogonale au plan de la plaque, une partie médiane rectiligne oblique faisant avec le plan de la plaque un angle de 10° et une dernière partie intérieure rectiligne perpendiculaire au plan de la plaque. Le bord supérieur est identique à l'exemple de la figure 2a. Dans cette configuration, la plaque est légèrement plus difficile à insérer en son bord inférieur, mais une fois en place, maintenue plus fermement.

En référence à la figure 2c, le bord inférieur à un profil en escalier complété d'un chanfrein 213 assurant à la plaque un maintien inférieur maximum. La bride 312 et le bord supérieur de la plaque 212 ont toutefois un profil en trois parties telles que décrites précédemment en référence au bord inférieur de l'exemple de la figure 2b permettant un serrage de la bride plus facile tout en assurant un serrage de la plaque contre l'élément de base optimum.

Dans la variante illustrée par la figure 2d, les profils sont définis à partir de quart de cercle soit : pour le bord inférieur une partie extérieure en quart de cercle concave, suivi par une partie intérieure rectiligne perpendiculaire au plan de la plaque ; pour le bord supérieur une partie extérieure rectiligne perpendiculaire au plan de la plaque suivi d'un ténon en quart de cercle convexe. Ce profil permet, pour des plaques intermédiaires 213 imposantes, une rotation aisée lors de son redressement contre l'élément de base.

En référence à la figure 1, on observe que les brides 130 présentent un profil sous-jacent concave composé d'une partie extérieure 135 selon l'une des variantes décrites en référence à la figure 2, et une partie intérieure 137 rectiligne oblique orientée vers l'extérieur. Cette partie intérieure 137 du profil de la bride et en correspondance avec un siège de bride 105 taillé dans la masse de l'élément de base. Ce siège de bride se présente sous la forme d'une encoche de largeur légèrement supérieure à celle de la bride correspondante, dont le profil, vu en section transversale, est rectiligne oblique orienté vers l'intérieur et dont les parois latérales sont verticales. L'angle $\alpha$ de ce profil par rapport à l'horizontale est identique à celui de la partie intérieure du profil sous-jacent de la bride 130. Cet angle $\alpha$ est usuellement compris entre 30° et 60°, par exemple 45°.

La bride 130 est enfilée sur une tige filetée 134 vissée en son extrémité inférieure dans l'élément de base 100. Par dessus cette bride est ensuite enfilée une rondelle 136. Un écrou 132 est alors vissé sur la tige filetée 134, ce qui pousse la bride 130 dans son siège 105 et contre le bord supérieur de la plaque intermédiaire 110. Il est à noter que l'orifice 133 de la bride par lequel traverse la tige filetée est élargi dans le sens de la longueur, et non dans le sens de la largeur, pour permettre un certain débattement vertical dans un plan orthogonal à la plaque intermédiaire maintenue. De plus, on notera que les parois verticales de l'encoche font office de guide pour la bride lors de son débattement vertical car elles empêchent cette bride de tourner autour de cette tige.

Le trou pratiqué dans l'élément de base 100 et recevant la tige filetée 134 est élargi en sa partie supérieure pour créer un logement 108 pour un ressort 138. Ce ressort 138 agit entre le fond du logement 108 et la face interne de la bride 130. Lorsque l'écrou 132 dévissé, ce ressort 138 pousse la bride 130 hors de son siège 105 et du bord supérieur de la plaque intermédiaire 110.

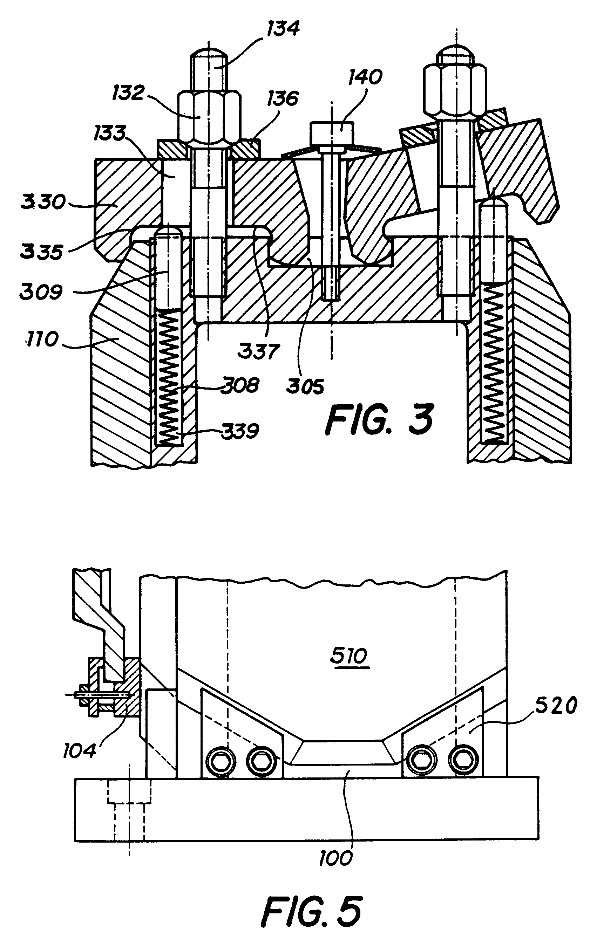

Sur la figure 3 est illustrée une autre forme de bride mobile 330 dans laquelle le partie extérieure du profil sous-jacent, ou interne 335, est complémentaire du profil du bord supérieur de la plaque intermédiaire 110 selon l'une des variantes décrites en référence à la figure, en l'occurrence la figure 2c, mais dans laquelle la partie intérieure 337 a un profil en escalier soit en trois sections : une section intérieure rectiligne ou légèrement convexe parallèle au plan de l'élément de base, une section médiane perpendiculaire au plan de l'élément et, reliée par un arc de cercle, une dernière section extérieure rectiligne également parallèle au plan de l'élément. Comme précédemment, le bride 330 est enfilée sur une tige filetée 134 vissée dans l'élément de base, sa partie intérieure 337 est engagée dans une encoche de l'élément de base et elle est maintenue en place par une rondelle 136 et un écrou 132. L'interface entre cette rondelle 136 et cet écrou 132 est galbé pour permettre un centrage automatique de la rondelle lors du serrage de l'écrou ainsi qu'un débattement légèrement plus important de la bride vers le haut lors du dévissement de l'écrou 132. L'orifice 133 de la bride par lequel passe la tige filetée 134 est aussi oblong, c'est-à-dire plus long que large. Par ailleurs, comme précédemment, les parois verticales de l'encoche empêche une rotation de la bride autour de son axe 134. La bride 330 peut ainsi s'ouvrir par simple rotation autour du point de contact entre l'élément de base et la section intérieure 337 de la bride. Ce mouvement est confirmé par l'ensemble boulon/ressort plat 140 maintenant la partie intérieure de la bride 130 abaissée en permanence.

Compte-tenu de la taille de la bride dans cette configuration, il est possible de dissocier les moyens élastiques repoussant la bride hors de son logement de la tige filetée. Ceci évite tout risque de coincement du ressort. En effet, le ressort 308 est logé dans un trou 339 percé en avant de la tige filetée, proche du bord de l'élément de base et il agit entre le fond du trou 339 et une butée 309 dont l'extrémité supérieure arrondie pousse sur la bride.

Grâce à de tels profils de bords supérieurs de plaques intermédiaires, du siège de bride et de la bride, cette bride n'a pas tendance à sa déporter vers l'extérieur lors du serrage mais elle plaque effectivement la plaque intermédiaire 110 contre l'élément de base 100.

Au milieu du bord supérieur et inférieur de chaque face de l'élément de base, une clavette saillante 160 est fixée orthogonalement à la face de l'élément de base par une vis 162 tel qu'illustré sur la figure 1. Cette clavette, a de préférence, la forme d'un tronc de pyramide allongé dont le sommet et éventuellement les côtés supérieures en inférieures sont convexes arrondies. En concordance, une rainure 150 est taillée sur la face intérieure de chaque plaque intermédiaire 110.

Tel que décrit jusqu'à maintenant, le dispositif fonctionne de la manière suivante.

Pour démonter une disposition particulière l'éléments de serrage 104 avec ou sans la pièce usinée 106, on accroche d'abord la plaque 110 à une élingue par un anneau non représenté situé sur le bord supérieur. Cette élingue est mise légèrement sous tension. Puis on déserre l'écrou 132. Le ressort 108 pousse la bride 130 hors de son logement. La plaque 110 a tendance à basculer ver l'extérieur compte-tenu que le centre de gravité de l'ensemble se situe au niveau des moyens de serrage donc hors de la base d'assise constituée par la règlette de positionnement 120. On peut alors soulever l'ensemble avec l'élingue pour la mettre de côté.

De manière inverse, la nouvelle plaque intermédiaire 110 prégarnie de ses moyens de serrage 104 est amenée suspendue par son bord supérieur à une élingue. Toujours du fait que le centre de gravité de cet ensemble se trouve dans le plan des moyens de serrage, la plaque 110 se présente oblique par rapport à la verticale. Tout en descendant lentement l'élingue, on peut conduire manuellement le bord inférieur de la plaque 110 dans la réglette de positionnement 120. Une fois le contact établi, la majeure partie du poids de l'ensemble est soutenue par la réglette 120. Il est alors très facile de redresser manuellement la plaque 110 contre l'élément de base 100, par une simple poussée sur le bord supérieur perpendiculairement à la face d'appui.

Au moment de l'engagement du bord inférieur de la plaque110 dans la réglette 120, celle-ci est encore oblique. Il est donc facile, à ce moment, d'ajuster aussi la position latérale de la plaque 110 pour faire concorder grossièrement la clavette 160 de l'élément de base avec la rainure 150 de la plaque. Pendant le redressement manuel de la plaque, cette clavette tronconale force un ultime mouvement latéral de la plaque par action de ces flancs contre les parois latérales internes de la rainure 150 pour centrer exactement la plaque. Il en est de même lorsque, en fin de redressement, la clavette supérieure 160 pénètre dans la rainure supérieure 150 de la plaque. La bride 130 est alors mise en place plus ou moins grossièrement, et l'écrou 132 est vissé par dessus. Lors du serrage de l'écrou 132, la bride 130 s'installe dans son siège contre l'effet du ressort 108 et force la plaque latérale contre l'élément de base.

Comme on a pu le constater, l'échange de cette plaque intermédiaire s'effectue rapidement réduisant à un minimum le temps d'immobilisation de la machine-outil. Cette manoeuvre étant particulièrement aisée, les risques d'accidents sont aussi réduits. De plus, de par la configuration des réglettes, des brides et surtout du dispositif de clavettes et de rainures, le positionnement de cette plaque intermédiaire s'est effectué exactement et son maintien est très rigide.

Dans la mesure où d'autres éléments de base, telles qu'équerres simples ou équerres doubles de hauteur identique, disposent des même points de clavetage c'est-à-dire de réglettes 120 et de brides 130 au profil identique, l'ensemble précédent peut être réutilisé sans aucune modification sur ces autres éléments de base. Par ailleurs, on peut concevoir que des éléments de base plus importants disposent de cet ensemble de points de clavetage en double on triple latéralement. On peut alors fixer autant de plaques intermédiaires adjacentes sur une même surface d'appui.

Le dispositif décrit précédemment peut faire l'objet de nombreuses variantes dans le cadre de l'invention.

Plutôt que maintenir les brides à l'aide d'une tige filetée et d'un écrou, on peut aussi envisager un dispositif comprenant un axe horizontal au-dessus de la bride sur lequel est engagé une came sous la forme d'une pièce cylindrique excentrée que prolonge une poignée transversale. Par rotation de cette poignée, la came, en tournant, vient appuyer contre la face supérieure de la bride qu'elle serre ainsi en position fermée. On peut aussi concevoir que ces brides soient directement actionnées par des vérins hydrauliques, pneumatiques ou électriques. La commande de ces vérins peut être semi-manuelle, par exemple à partir d'une pédale, ou automatique avec un micro-interrupteur monté dans l'élément de base affleurant la surface et actionné par la plaque elle-même.

Le système de centrage composé d'une clavette pénètrant dans une rainure correspondante peut aussi être modulée selon les besoins. La clavette peut appartenir à la plaque intermédiaire plutôt qu'à l'élément de base. Plutôt qu'être maintenue par une vis, la clavette peut comporter une extension arrière 410, tel qu'illustré sur la figure 4a, s'engageant dans une rainure dans laquelle elle est bloquée par simple frottement métal contre métal. La face supérieure et inférieure peut par ailleurs présenter un chanfrein 400 en son extrémité.

En référence à la figure 4b, la clavette peut aussi être fendue horizontalement en son milieu pour améliorer son élasticité et faciliter son introduction dans la rainure. Après de nombreux essais en atelier, une clavette fendue verticalement mais décalée par rapport à son centre tel que représenté en figure 4c, s'est révélée plus avantageuse. En effet, la partie majeure gauche assure une rigidité nécessaire pour le calage de la plaque intermédiaire ainsi qu'un lieu propice pour la vis de fixation 162 alors que la partie mineure droite apporte l'élasticité nécessaire à une mise en place aisée.

La rainure recevant la clavette de centrage peut comprendre intérieurement en chacune des extrémités des pièces mobiles élastiquement telles qu'illustrées sur la figure 4d.

A la place des deux éléments de centrage supérieur et inférieur décrits précédemment, on peut aussi prévoir un ensemble de centrage plus important situé au milieu de la face de l'élément de base et de la plaque 110.

Un autre mode de centrage est présenté sur la figure 5 dans lequel le bord inférieur de la plaque 110 a une forme en V orienté vers le bas et le bord supérieur des réglettes de position 520 sont obliques vers le centre de l'élément de base. Au prix d'une légère réduction de la surface utile pour disposer des éléments de serrage 104, ce mode permet un montage encore plus rapide de la plaque intermédiaire 110 de par le centrage automatique de celle-ci.

De nombreuses autres améliorations peuvent être apportées à ce dispositif dans le cadre de cette invention.

## Revendications

1. Dispositif de fixation d'une plaque intermédiaire (110,111), sur laquelle sont montés des moyens de serrage (104) permettant de maintenir en position des pièces á usiner, contre un élément de base (100) ancré sur la table d'une machine-outil ou sur une palette mobile, deux côtés opposés de la plaque intermédiaire présentant, en section transversale une partie oblique orientée vers l'extérieur leur permettant d'être enclavées contre l'élément de base muni en un bord d'une ou plusieurs règles fixes (120) de positionnement et en un bord opposé d'une ou plusieurs brides (130), chaque règle et bride présentant, en section transversale, un profil interne complémentaire au bord correspondant de la plaque intermédiaire, caractérisé en ce que

   - la plaque intermédiaire (110,111) est parallélépipédique aplatie verticale avec sa face intérieure plane venant se plaquer contre la face verticale également plane de l'élément de base (100) ;
   - en ce que les règles fixes (120) sont disposées dans la partie inférieure de l'élément de base (100) et les brides mobiles (130), engagées en permanence dans le bord supérieur de l'élément de base, sont guidées de telle sorte á être mobiles seulement dans un plan orthogonal par rapport á cette plaque intermédiaire (110,111) ;
   - et en ce que la face intérieure de la plaque intermédiaire et la face plane extérieure de l'élément de base complétées de moyens permanents de positionnement (150,160) de la plaque dans le sens latéral.

2. Dispositif selon la revendication 1, caractérisé en ce que la distance entre le bord inférieur et supérieur de la plaque est standardisée.

3. Dispositif selon la revendication 1, caractérisé en ce que le bord inférieur et/ou supérieur permettant à la plaque intermédiaire d'être enclavée contre l'élément de base présente, en section transversale, essentiellement un profil rectiligne oblique orienté vers l'extérieur faisant avec le plan de la plaque un angle compris entre 20° et 75°.

4. Dispositif selon la revendication 1, caractérisé en ce que l'élément de base présente sur sa face extérieure une ou plusieurs clavettes de positionnement orthogonales dont l'extremité (400) des faces superieures et/ou inferieures et/ou laterales sont arrondies ou chamfreinées obliquement, lesquelles clavettes viennent se loger, lors de l'installation de la plaque sur l'élément de base, dans des rainures complémentaires taillées sur la face intérieure de cette plaque intermédiaire.

5. Dispositif selon la revendication 4, caractérisé en ce que les coins intérieurs (400) supérieurs et inférieurs d'une clavette de positionnement sont arrondis ou tronçonnés obliquement.

6. Dispositif selon l'une des revendications 4 ou 5, caractérisé en ce que les clavettes de positionnement sont fendues verticalement mais décalées par rapport au centre.

7. Dispositif selon l'une des revendications précédentes, caractérisé en ce que l'élément de base présente, sous chaque bride mobile, un siège de brides (105) sous la forme d'une encoche dont le profil, vu en section transversale, est rectiligne oblique orienté vers l'intérieur ; et en ce que chaque bride présente, en section transversale, un profil interne dont la partie extérieure (135) est complémentaire aux bords de la plaque intermédiaire qu'elle maintient et la partie intérieure (137) est rectiligne oblique orienté vers l'extérieur et complémentaire au profil du siège dans lequel elle s'assoit.

8. Dispositif selon l'une des revendications précédentes, caractérisé en ce que l'élément de base présente, sous chaque bride, un siège de bride (305) sous la forme d'une encoche taillée perpendiculairement dans l'élément ; et en ce que la partie intérieure (337) du profil interne de chaque bride est en trois sections : une section intérieure rectiligne ou légèrement convexe parallèle au plan de l'élément de base, une section médiane perpendiculaire au plan de l'élément et une dernière section extérieure rectiligne parallèle au plan de l'élément.

9. Dispositif selon la revendication 1, caractérisé en ce que la fermeture ou l'ouverture de la bride est réalisée par un écrou (132) vissé audessus de la bride (130) sur un tige filetée (134) solidaire de l'élément de base et passant au travers de la bride par un orifice (133) élargi dans le sens de la longueur permettant un débattement vertical de cette bride, la rotation de cette bride autour de la tige (134) étant empêchée par les parois verticales du siège de bride (305).

10. Dispositif selon la revendication 1, caractérisé en ce que la fermeture ou l'ouverture de la bride est réalisée par un vérin hydraulique, pneumatique ou électrique, solidaire de l'élément de base.

## Claims

1. A device for securing an intermediate plate (110,111) upon which are mounted means (104) for securing workpieces in position against a base element (100) anchored on the platen or on a mobile plate of a machine-tool, wherein two opposite sides of the intermediate plate have in transverse cross-section an outwardly-facing oblique part by means of which they can be gripped against the base element which is provided at one edge with one or more fixed positioning rulers (120) and at an an opposite edge with one or more clamps (130), each ruler and clamp having, in transverse cross-section, an internal profile complementary to the corresponding edge of the intermediate plate, characterised in that :
   - the intermediate plate (110,111) is a vertical flattened parallelepiped whose inner face comes to bear against the also-planar vertical face of the base element (100);
   - in that the fixed rulers (120) are arranged in the lower part of the base element (100) and the mobile clamps (130), which are permanently engaged in the upper edge of the base element, are guided so as to be mobile only in a plane orthogonal to this intermediate plate (110,111);
   - and in that the inner face of the intermediate plate and the outer plane face of the base element further comprise non-removable means (150,160) for positioning the plate in the lateral direction.

2. A device according to claim 1, characterised in that the distance between the lower and upper edge of the plate is standardised.

3. A device according to claim 1, characterised in that the lower and/or upper edge enabling the intermediate plate to be gripped against the base element has, in transverse cross-section, essentially an outwardly-facing oblique straight profile making an angle comprised between 20° and 75° with the plane of the plate.

4. A device according to claim 1, characterised in that the base element has on its external face one or more orthogonal positioning keys of which the ends (400) of the upper and/or lower and/or side faces are rounded or chamfered obliquely, which keys are received, during the installation of the plate on the base element, in complementary grooves machined in the inner face of said intermediate plate.

5. A device according to claim 4, characterised in that the inner, upper and lower corners (400) of a positioning key are rounded or sectioned obliquely.

6. A device according to claim 4 or 5, characterized in that the positioning keys are vertically slit along a line offset from the centre.

7. A device according to any preceding claim, characterized in that the base element has, under each mobile clamp, a clamp seat (105) in the form of a notch whose profile, in transverse cross-section, is an inwardly-facing oblique straight line; and in that each clamp has, in transverse cross-section, an internal profile whose outer part (135) is complementary to the edges of the intermediate plate held thereby and an inner part (137) which is an outwardly-facing oblique straight line complementary to the profile of the seat in which it sits.

8. A device according to any preceding claim, characterized in that the base element has, under each clamp, a clamp seat (305) in the form of a notch cut perpendicularly in the element; and in that the inner part (337) of the internal profile of each clamp is made of three sections : an inner rectilinear or slightly convex section parallel to the upper face of the base element, a median section perpendicular to the upper face of the element and a last rectilinear outer section parallel to the upper face of the element.

9. A device according to claim 1, characterized in that securing or releasing of the clamp is carried out by means of a nut (132) screwed above the clamp (130) on a threaded rod (134) solid with the base element and passing through the clamp via an orifice (133) enlarged longitudinally to allow a vertical play of said clamp, rotation of the clamp about the rod (134) being prevented by the vertical walls of the clamp seat (305).

10. A device according to claim 1, characterized in that securing or releasing of the clamp is carried out by means of a hydraulic, pneumatic or electric jack fixed to the base element.

**Patentansprüche**

1. Spannvorrichtung für eine Zwischenplatte (110, 111), auf der Aufspannmittel (104) zum Halten von Werkstücken (106) angeordnet sind,
    - wobei die Zwischenplatte (110, 111) gegen ein Basiselement (100) gehalten ist, das auf dem Tisch einer Werkzeugmaschine oder auf einer beweglichen Palette angeordnet ist,
    - wobei an zwei entgegengesetzten Seiten der Zwischenplatte ein im Querschnitt abgeschrägtes, nach außen orientiertes Teil vorgesehen ist, um gegen das Basiselement verkeilt zu werden, welches an einem Rand mit einer oder mehreren Positionierungsschienen (120) und an einem gegenüberliegenden Rand mit einem oder mehreren Flanschen (130, 330) versehen ist,
    - und wobei jede Schiene und jeder Flansch im Querschnitt ein inneres Profil aufweist, welches zum entsprechenden Rand der Zwischenplatte komplementär ist,
    dadurch gekennzeichnet,
    - daß die Zwischenplatte (110, 111) als flacher vertikaler Parallelepiped gestaltet ist, dessen plane Vertikalfläche der ebenfalls planen Vertikalfläche des Basiselements (100) anliegt,
    - daß die ortsfesten Positionierungsschienen (120) im unteren Teil des Basiselements (100) angeordnet und die beweglichen Flansche (130, 330), die dauernd in den oberen Rand des Basiselements eingreifen, derart geführt sind, daß sie nur in einer zu dieser Zwischenplatte (110, 111) vertikalen Ebene beweglich sind,
    - und daß die Innenfläche der Zwischenplatte und die ebene Außenfläche des Basiselementes darüberhinaus permanente Mittel (150, 160) aufweisen, um die Platte seitlich zu positionieren.

2. Vorrichtung nach Anspruch 1, dadurch gekennzeichnet, daß der Abstand zwischen dem unteren und dem oberen Rand der Platte (110, 111) standardisiert ist.

**3.** Vorrichtung nach Anspruch 1, dadurch gekennzeichnet, daß der untere und/oder obere Rand der Zwischenplatte (110, 111), mittels welcher diese gegen das Basiselement (100) verkeilt werden kann, im Querschnitt ein im wesentlichen geradliniges, schräges, nach außen orientiertes Profil aufweist, welches mit der Ebene der Platte einen Winkel zwischen 20° und 75° einschließt.

**4.** Vorrichtung nach Anspruch 1, dadurch gekennzeichnet, daß das Basiselement (100) auf seiner Außenfläche ein oder mehrere zum Basiselement orthogonale Positionierungskeile (160) aufweist, deren Enden (400) der oberen und/oder unteren und/oder seitlichen Flächen abgerundet oder schräg abgeschnitten sind, wobei diese Keile beim Einsetzen der Platte (110, 111) auf das Basiselement (100) in komplementäre Rillen (150) eingreifen, die auf der Innenfläche dieser Zwischenplatte (110, 111) angebracht sind.

**5.** Vorrichtung nach Anspruch 4, dadurch gekennzeichnet, daß die oberen und unteren, inneren Ecken (400) eines Positionierungskeiles (160) abgerundet oder schräg abgeschnitten sind.

**6.** Vorrichtung nach einem der Ansprüche 4 oder 5, dadurch gekennzeichnet, daß die Positionierungskeile vertikal geschlitzt, jedoch gegenüber dem Mittelpunkt versetzt (Fig. 4c) sind.

**7.** Vorrichtung nach einem der vorhergehenden Ansprüche, dadurch gekennzeichnet, daß das Basiselement (100) unter jedem beweglichen Flansch (130) einen Flanschsitz (105) aufweist, der die Gestalt einer Vertiefung hat, deren Profil, im Querschnitt gesehen, geradlinig schräg nach innen orientiert ist, und daß jeder Flansch (130) im Querschnitt ein inneres Profil aufweist, dessen Außenteil (135) zu den Rändern der Zwischenplatte, die er hält, komplementär ist und dessen Innenteil (137) geradlinig schräg nach außen orientiert und zum Profil des Sitzes, in dem er sitzt, komplementär ist.

**8.** Vorrichtung nach einem der vorhergehenden Ansprüche, dadurch gekennzeichnet, daß das Basiselement (100) unter jedem Flansch (330) einen Flansch-Sitz (305) aufweist, der die Form einer senkrecht in das Element eingeschnittenen Vertiefung aufweist, und daß der Innenteil (337) des inneren Profils eines jeden Flansches drei Abschnitte aufweist:

- einen inneren, geradlinigen oder leicht konvexen Abschnitt, der parallel zur Ebene des Basiselementes ist,

- einen mittleren Abschnitt, der senkrecht zur Ebene des Basiselementes ist und

- einen äußeren, geradlinigen Abschnitt, der parallel zur Ebene des Basiselementes ist.

**9.** Vorrichtung nach Anspruch 1, dadurch gekennzeichnet, daß das Schließen oder Öffnen des Flansches mittels einer Mutter (132) durchgeführt wird, welche über dem Flansch (130) auf eine Gewindestange (134) aufgeschraubt ist, die einteilig mit dem Basiselement ausgebildet ist und durch eine Öffnung (133) des Flansches (130) verläuft, wobei diese Öffnung in Flansch-Längsrichtung (in der Zeichenebene der Fig. 3) erweitert ist, um ein Kippen dieses Flansches (in der Zeichenebene der Fig. 3) zu ermöglichen, wobei die Drehung dieses Flansches um die Stange (134) durch die senkrechten Wände des Flansch-Sitzes (305) verhindert ist.

**10.** Vorrichtung nach Anspruch 1, dadurch gekennzeichnet, daß das Schließen oder Öffnen des Flansches mittels eines hydraulischen Arbeitszylinders, eines Pneumatikzylinders oder einer elektrischen Betätigungsvorrichtung durchgeführt wird, der bzw. die mit dem Basiselement einteilig ausgebildet ist.

FIG. 1

FIG. 2

FIG. 4

FIG. 3

FIG. 5